# EUROPÄISCHE PATENTANMELDUNG

(11) **EP 0 596 388 A1**
(43) Veröffentlichungstag der Anmeldung: **11.05.1994**
(21) Anmeldenummer: 93117324.9
(22) Anmeldetag: 26.10.1993
(51) Int. Cl.: B62J 11/00, G09B 29/06

(54) **Vorrichtung zum Aufnehmen und Halten von Streckenkarten, für Fahrräder**

(30) Priorität: 31.10.1992 DE 4236849; 23.04.1993 DE 4313259; 13.08.1993 DE 9312098 U
(71) Anmelder: Klimmer, Josef, D-94371 Rattenberg (DE)
(72) Erfinder: Klimmer, Josef, D-94371 Rattenberg (DE)
(74) Vertreter: Wasmeier, Alfons, Dipl.-Ing.

(57) **Zusammenfassung**

Eine Vorrichtung zum Aufnehmen und Halten von Streckenkarten, die an der Längsstange von Fahrrädern oder entsprechenden Halterungen befestigbar ist, weist eine Streckenkarte in Form eines aufwickelbaren Streifens auf, dessen beide Enden jeweils mit einer Drehachse verbunden sind, die außerhalb des Gehäuses (130) Drehknöpfe besitzt, mit deren Hilfe die Streckenkarte auf die eine Achse aufgewickelt und von der anderen Achse abgewickelt wird. Die Achsen (137,138) sind in Führungsbuchsen (141,142) aus Kunststoff oder Gummi in den Seitengehäusewänden gelagert. Das Gehäuse besteht aus einem unteren (131) und einem oberen (132), den unteren Teil (131) schuhkartonartig umschließenden Teil und ist wasserdicht, stoßfest und geräuschdämpfend. Der Boden des Gehäuses (131) ist mit einem U-förmigen Tragbügel (148) verbunden, an dessen Seitenarmen ein mit der Lenkstange befestigbarer Halteblock lösbar so festgelegt ist, daß die Vorrichtung auf einfache Weise von der Halterung abgenommen und mitgeführt werden kann.

## Beschreibung

Die Erfindung betrifft eine Vorrichtung nach dem Oberbegriff des Anspruches 1. Eine derartige Vorrichtung findet vorzugsweise Anwendung an Fahrradlenkern.

Radfahren ist im Laufe der Zeit zu einem sehr ausgedehnten Volkssport geworden. Das Fahren nach Karte im Gelände hat dabei eine große Bedeutung erlangt. Radfahrer, die im Gelände oder auf Nebenstraßen unterwegs sind und an einem Tag größere Strecken (bis 200 km und darüber) zurücklegen, benötigen Spezialkarten mit einem Maßstab von 1:50 000 bzw. 1:100 000. Derartige Spezialkarten sind als Faltkarten im Handel erhältlich. Sie sind z.B. nach Planquadraten gefaltet. Das Umfalten auf das bzw. eines der nächsten Planquadrate ist wegen der Größenabmessung der Karten relativ umständlich und zeitraubend. Wenn der Radfahrer seine Karte in einer Kartentasche aufbewahrt, ist das Umfalten relativ kompliziert, weil er die Karte zum Umfalten aus der Tasche entnehmen und nach Gebrauch wieder in die Tasche zurückstecken muß. Eine andere, häufig angewandte Möglichkeit besteht darin, die Karte im Rucksack aufzubewahren und jedes Mal, wenn sie benötigt wird, anzuhalten, die Karte aus dem Rucksack zu holen, sie zu studieren und dann wieder zu verstauen.

Insbesondere von Extremfahrern wird letztere Methode bevorzugt, da die andere Lösung, den Plan in einer Kartentasche am Lenker zu befestigen, oder einen den Plan aufnehmenden Halter nach Art eines Notenständers am Lenker zu verwenden, oder aber in Verbindung mit einer Lenkertasche festzulegen, die Sicht des Fahrers nach unten erheblich beeinträchtigt und als sehr störend empfunden wird.

Insgesamt ist somit die Handhabung von Plänen bzw. Streckenkarten für Radfahrer, aber auch für Motorrad- oder Autofahrer relativ umständlich und zeitraubend.

Aufgabe der Erfindung ist es deshalb, eine Vorrichtung zu schaffen, mit der es dem Benutzer möglich ist, auf besonders einfache und zweckmäßige Weise die Streckenkarte fortlaufend zu lesen, insbesondere die Streckenkarte durch einfachste Bedienung zu jedem Zeitpunkt und witterungsunbeeinflußt betriebsbereit zu halten, ohne daß ein Umfalten von einem Planquadrat auf das nächste erforderlich wird.

Gemäß der Erfindung wird dies mit einer Vorrichtung mit den Merkmalen des Kennzeichens des Anspruches 1 erreicht. Weitere Ausgestaltungen der Erfindung sind Gegenstand der Unteransprüche.

Die Streckenkarte ist in Streifenform ausgebildet, wobei die Breite des die Streckenkarte aufnehmenden Gehäuses in Rollenform der Streifenbreite entspricht, und die Karte im Gehäuse auf- und abgewickelt wird, so daß ein Kartenstreifen einem Streckenkartenteil Nord-Süd der Streckenkarte (bzw. einer Spalte) entspricht und nach Ost und West anschließende Streckenkartenstreifen als gesonderte Streifen übereinander bzw. untereinander angeordnet sind. Eine gesamte Streckenkarte besteht somit nach vorliegender Erfindung aus einer Vielzahl von Kartenstreifen, die blockartig über-und aufeinander liegend angeordnet sind. Diese blockartig zusammengefaßten Streifen sind am einen Ende mit der Achse des Gehäuses befestigt und auf die Achse aufgewickelt. Zum Lesen der Karte werden die Streifen aus dem Gehäuse herausgezogen und es wird der Streifen aufgeschlagen, der den jeweiligen gerade notwendigen Teil der Streckenkarte betrifft. Vorzugsweise sind die einzelnen Streifen der Streckenkarte mit einer Kunststoffschicht kaschiert, damit sie witterungsbeständig sind, und haben eine hohe Festigkeit. Sie können aus Haftmaterial bestehen bzw. Haftpunkte aufweisen, so daß die einzelnen, übereinanderliegenden Streifen aneinander haften. Wird ein darunterliegender Streifen benötigt, wird der bzw. werden die darüberliegenden Streifen gelöst und umgeschlagen, und zwar wahlweise außen um das Gehäuse herum, oder innen entlang der Innenfläche des Gehäuses, wobei am Gehäuse z.B. eine Mechanik vorgesehen ist, die die aufgeschlagenen bzw. umgeschlagenen Kartenstreifen aufnimmt und aufgeschlagen hält. Bei allen Ausführungsformen nach der Erfindung wird lediglich ein kleiner Teil der Streckenkarte, der gerade eingesehen werden soll, zum Kartenstudium bereitgestellt, z.B. ein Planquadrat, das gerade benötigt wird. Von diesem Planquadrat kann kontinuierlich der Streifen weiter auf- oder abgewickelt werden, oder aber es kann auf einen anderen Streifen übergegangen werden, wenn das Anschluß-Planquadrat sich auf einem anderen Streifen befindet. Dabei wird in jedem Fall der Streifen lediglich ausgerollt und wieder eingerollt, was eine besonders einfache und zweckmäßige Handhabung ermöglicht. Das Ausziehen und Einrollen erfolgt dabei zweckmäßigerweise mittels Federantrieb nach Art eines Rollos.

Das die Streckenkarte in Streifenform aufnehmende Gehäuse ist nach einer Ausführungsform der Erfindung eine zylindrische Rolle mit einem Öffnungsspalt für die Streifen und einer innerhalb des Gehäuses angeordneten Achse, um die die Streifen auf- bzw. abgewickelt werden. Die Achse des Gehäuses kann dabei außerhalb des Gehäuses einen Drehknopf aufweisen, so daß die Achse und damit der Kartenstreifen durch Drehen des Knopfes auf- und abgewickelt werden kann. Gehäuse und Achse können jedoch vorzugsweise auch rolloartig ausgebildet sein, d.h., daß auf der Achse eine Federvorrichtung angeordnet ist, die die Achse und damit die darauf aufgewickelte Streifenkarte unter Drehspannung hält, so daß beim Abwickeln des Streifens der Streckenkarte die Federkraft einem solchen Abwickelvorgang entgegenwirkt, und ein selbsttätiges Aufwickeln sichergestellt wird; auch ist z.B. analog einem Rollo ein Sperrmechanismus eingebaut, der den Kartenstreifen in einer gewünschten, mehr oder weniger weit ausgezogenen Position festhält und den Streifen bei Freigabe der Sperre wieder automatisch aufwickelt. Damit der aus dem Gehäuse herausgezogene Streifen der Streckenkarte eine etwa horizontale Position einnimmt, wenn die Karte gelesen werden soll, ist am Gehäuseschlitz oder an der Befestigungsvorrichtung eine Haltevorrichtung (z.B. ein Halterahmen oder parallele Einzelstäbe) vorgesehen, auf der der Streifen der Streckenkarte aufliegt. Eine weitere Auflagestelle kann der obere Abschluß des Steuerrohres bzw. der Lenkeraufnahme sein.

In weiterer Ausgestaltung der Erfindung kann dem Gehäuse ein weiteres Gehäuse zugeordnet sein, in das der vom ersten Gehäuse abgewickelte Streifen der Karte aufgewickelt wird. Die beiden Gehäuse können im Abstand übereinander angeordnet sein, wobei der Teil der Streifenkarte, der gerade abgelesen werden soll, in einer Schleife umgelenkt wird, wozu ein entsprechendes Rahmengestell erforderlich ist. Andererseits können die beiden Gehäuse auch etwa horizontal in einem Abstand voneinander angeordnet sein, der etwa einem Planquadrat bzw. dem Ausschnitt der Streifenkarte entspricht, die man jeweils einsehen möchte.

Bei einer weiteren, bevorzugten Ausführungsform der Erfindung ist die Streckenkarte mit zwei parallel nebeneinander angeordneten Drehachsen so befestigt, daß das eine Ende der Streckenkarte auf einer Drehachse und das andere Ende der Streckenkarte auf der anderen Drehachse befestigt ist. Diese Befestigung kann beispielsweise durch Stecken, Klemmen, Kleben oder dergl. erfolgen, derart daß die Streckenkarte an den beiden Einspannstellen auf einfache Weise lösbar ist, während des Betriebes aber sich von den beiden Drehachsen nicht ungewollt lösen kann. Die gesamte Streckenkarte ist somit auf die beiden Drehachsen verteilt angeordnet und wird bei Verdrehen der einen Drehachse in der einen Richtung und bei Verdrehen der anderen Drehachse in der anderen Richtung aufgewickelt bzw. abgewickelt, so daß der jeweils gerade benötigte Abschnitt der Streckenkarte dem Betrachter zugewandt zwischen den beiden Drehachsen bereitgestellt werden kann und durch Drehen der einen oder der anderen Drehachse die Streckenkarte in der einen oder der anderen Richtung weiterbewegt wird. Die beiden Achsen weisen jeweils einen Drehknopf bzw. einen Drehgriff auf. Vorzugsweise ist der Drehknopf der einen Drehachse auf der einen Seite des Gehäuses und der Drehknopf der anderen Drehachse auf der anderen Seite des Gehäuses angeordnet, so daß der jeweilige Drehknopf sicher und ungehindert betätigt werden kann. Zum Weiterbewegen der Streckenkarte wird der eine Drehknopf im Uhrzeigersinn und der andere im Gegenuhrzeigersinn gedreht.

Die beiden Drehachsen sind in einer Halte- bzw. Führungsvorrichtung angeordnet, die beispielsweise in Form einer U-Schiene ausgebildet ist und an der die Streckenkarte anliegt. Die U-Schiene ist an den freien Enden der beiden U-Schenkel abgerundet, aufgebogen oder dergl., so daß die Streckenkarte durchgehend glatt und an den Übergängen gerundet anliegt, damit eine Beschädigung der Streckenkarte beim Weiterdrehen verhindert wird. Die beiden Drehachsen können in der Halte- bzw. Führungsvorrichtung bzw. den beiden entsprechenden Seitenwänden dieser Vorrichtung gelagert sein, wobei die beiden Drehknöpfe bzw. Drehgriffe von den Drehachsen lösbar sind, damit die Drehachsen nach Abnahme einer Seitenwand herausgenommen und ggfs. durch eine andere Karte ersetzt werden können.

Die Halte- bzw. Führungsvorrichtung wird von einem vorzugsweise allseitig geschlossenen Gehäuse umgeben, das vorzugsweise aus Kunststoff oder Aluminium hergestellt ist und das zumindest auf der Oberseite transparent ist, damit die Strekkenkarte vom Benutzer gelesen werden kann. Die Form der Halte- und Führungsvorrichtung sowie des äußeren Gehäuses ist etwa kongruent ausgebildet, so daß die Streckenkarte zwischen beiden geführt ist und zumindest an der oberen Sichtseite nur ein geringer Abstand zwischen den beiden Gehäusen besteht, damit ein einwandfreies Ablesen der Karte gewährleistet ist. Anstatt die beiden Drehachsen in der Halte- und Führungsvorrichtung zu lagern, können die Lagerstellen auch in oder an den Seitenflächen des Gehäuses ausgebildet sein, wobei vorzugsweise eine der beiden Seitenflächen abnehmbar ist, damit die Drehachsen aus dem Gehäuse entfernt werden können, um z.B. eine neue Streckenkarte einzulegen.

Auf der Unterseite des Gehäuses ist eine Befestigungsvorrichtung vorgesehen, die unmittelbar oder über ein Zwischenglied mit dem Fahrradlenker oder einer entsprechenden Aufnahmevorrichtung verbunden ist. Die Halterung kann beispielsweise eine Schwalbenschwanz-Vorrichtung sein, auf die eine entsprechend ausgebildete, mit der Gehäuseunterseite verbundene Schwalbenschwanzschiene aufgesetzt wird, sie kann eine Klemmvorrichtung sein, die durch Schraubbefestigung festgelegt wird, oder aber eine andere, an sich bekannte Befestigungsvorrichtung.

Nach einer bevorzugten Ausführungsform der Erfindung weist die Vorrichtung ein längliches, quaderförmiges Gehäuse auf, dessen Oberteil bzw. Deckel den Unterteil schuhkartonartig übergreift. Die beiden Gehäuseteile sind in zusammengesetzten Zustand wasserdicht und stoßfest miteinander verbunden und ergeben eine hohe Stabilität. Zum Wechseln von Streckenkarten sind Oberteil und Unterteil des Gehäuses lösbar, insbesondere durch unverlierbare Schrauben miteinander verbunden. Die das Gehäuse durchsetzenden beiden parallelen Achsen, die die Aufwickel- und die Abwickelrolle für die Streckenkarte bilden, sind aus dem Gehäuse herausgeführt, und ein Ende der einen Achse sowie das entgegengesetzte Ende der anderen Achse nimmt Drehknöpfe auf, mit deren Hilfe die Streckenkarte in der einen bzw. in der anderen Richtung bewegt wird. Vorzugsweise ist zwischen den beiden Drehachsen ein tischartiger Steg vorgesehen, der als Auflage für die Streckenkarte dient, sodaß die Streckenkarte plan unmittelbar unterhalb des Sichtfensters angeordnet und einwandfrei lesbar ist. Auf der Unterseite des Gehäuses ist ein Tragbügel befestigt, der einen Halteblock aufnimmt, welcher mit der Fahrradlenkstange lösbar verbunden wird. Tragbügel und Halteblock sind miteinander verschraubt und gegeneinander verdrehbar sowie durch seitliche Stellknöpfe festlegbar, so daß das Gehäuse mit Tragbügel gegenüber dem mit der Lenkstange verbundenen Halteblock verschwenkt und damit das Sichtfenster in der Blickrichtung zum Radfahrer eingestellt werden kann und eine stufenlose Verstellung der Streckenkarte über, vor oder hinter dem Lenker erreicht wird. Die gesamte Vorrichtung ist auf einfache Weise, z.B. lediglich durch Lockern der Schrauben und Abziehen von der Lenkstange abnehmbar, so daß die Vorrichtung beim Verlassen des Fahrrades mitgenommen werden kann. Wahlweise bleibt der Halteblock an der Lenkstange befestigt, während der Tragbügel mit der Vorrichtung gelöst und abgenommen wird.

Die gesamte Vorrichtung ist in sich und in Verbindung mit der Fahrradlenkstange durch Kunststoff- bzw. Gummilagerung, Dämpfungselemente und dergl. so ausgebildet, daß die gesamte Vorrrichtung geräuschfrei am Fahrrad befestigt ist. Durch Gummi-Führungsbuchsen in Form von Lagerschalen wird eine hohe Stabilität erreicht, so daß die Achse sich nicht von selbst verschieben kann.

Gerade beim sportlichen Radfahren ist für den Radfahrer ein Fahrradcomputer häufig ein notwendiges Zubehör. Ein solcher Fahrradcomputer wird im Falle der Erfindung auf besonders zweckmäßige Weise mit der Streckenkartenvorrichtung so kombiniert, daß eine Achse aus dem Gehäuse verlängert wird, die eine Buchse aufnimmt, auf der der Fahrradcomputer sitzt. Mittels Arretierungsstift wird die Buchse an der Gehäusewand festgelegt.

Da mit der Vorrichtung nach der Erfindung die Ausgestaltung der Streckenkarte gegenüber einer herkömmlichen, gefalteten Streckenkarte in eine kontinuierliche streifenförmige, aufgerollte Strekkenkarte organisiert wird, wird die herkömmliche Streckenkarte in einzelne, parallele Spalten zerschnitten, und die Einzelspalten werden kontinuierlich aneinander anschließend zu einer Streifenform zusammengesetzt, z.B. zusammengeklebt (oder auch unmittelbar in Streifenform kontinuierlich und einteilig hergestellt). Dem Benutzer steht somit jeweils zur Ansicht in der erfingsgemäßen Vorrichtung ein Ausschnitt der Streckenkarte in Form einer oder mehrerer Spaltenbreiten entsprechend der Breite der Vorrichtung zur Verfügung. Wenn der Weg von einer Spalte zur benachbarten Spalte führt (bei gefalteter Streckenkarte), wird im Falle der streifenförmigen Streckenkarte die Karte um eine volle Spaltenlänge weitergedreht.

Damit für den Benutzer eine eindeutige Zuordnung zwischen dem ersten Abschnitt und dem um eine Spalte versetzten zweiten Abschnitt erzielt wird, sind am rechten Rand einer jeden Spalte Markierungen vorgesehen, denen entsprechende kongruente Markierungen am linken Rand der darauffolgenden Spalte entsprechen, so daß der Benutzer ohne jede Schwierigkeit eine eindeutige Zuordnung treffen kann und genau weiß, wie weit er die streifenförmige Streckenkarte zu drehen hat.

Diese Markierungen stellen somit die Übergangsstellen von einer Spalte zur anderen auf der gefalteten Streckenkarte dar. Die Markierungen selbst sind entweder in Form von aufgedruckten Buchstaben, Zahlen oder dgl. vorgesehen, vorzugsweise transparent oder gestrichelt, punktiert oder dgl., damit die geogr.Darstellungen der Karte so wenig wie möglich beeinflußt werden. Alternativ ist es auch möglich, am Rand der jeweiligen Abschnitte vorstehende Lappen oder dgl. vorzusehen, die die entsprechenden Ziffern, Buchstaben oder dgl. aufweisen, so daß damit die Kartendarstellung überhaupt nicht beeinflußt wird. Zur weiteren Vereinfachung der bequemen Ablesung der Streckenkarte in Streifenform kann beispielsweise jeweils am linken Rand der einzelnen Abschnitte ein zusätzlicher schmaler Streifen vorgesehen sein, der mit der Darstellung des rechten Randes des vorausgehenden Abschnittes übereinstimmt, so daß damit eine Überlappung der Karte in begrenztem Umfang erreicht wird und ein evtl. Zurückdrehen auf die frühere Stelle der Ablesung zur Orientierung vermieden werden kann.

Nachstehend wird die Erfindung in Verbindung mit der Zeichnung anhand von Ausführungsbeispielen erläutert. Es zeigt:
Fig.1 1 schematisch eine Streckenkarte herkömmlicher Art,
Fig. 2 schematisch eine Streckenkarte gemäß der Erfindung,
Fig. 3 eine schematische Seitenansicht einer Ausführungsform der Erfindung an einem Fahrradlenker befestigt,
Fig. 4 eine Aufsicht auf die Darstellung nach Fig. 3,
Fig. 5 eine Seitenschnittansicht in vergrößertem Maßstab,
Fig. 6 eine schematische Schnittansicht einer anderen Ausführungsform der Erfindung,
Fig. 7 eine schematische Darstellung einer aus mehreren Streifen bestehenden Streckenkarte,
Fig. 8 eine weitere Ausführungsform der Erfindung,
Fig. 9 in schematischer, perspektivischer Ansicht eine andere Ausführungsform der Erfindung,
Fig. 10 eine Aufsicht auf die Vorrichtung nach Fig. 9,
Fig. 11 eine Schnittansicht durch die Darstellung nach Fig. 10 längs der Linie A-A,
Fig. 12 schematisch einen Lenker mit aufgesetzter Vorrichtung in schematischer Darstellung und in Aufsicht,
Fig. 13 eine Schnittansicht längs der Linie B-B der Fig. 12 von der Seite,
Fig. 14 eine Ansicht einer herkömmlichen Streckenkarte in aufgefaltetem Zustand,
Fig. 15 eine Streckenkarte gemäß der Erfindung,
Fig. 16 eine weitere Ausführungsform einer Streckenkarte nach der Erfindung,
Figur 17 zeigt eine bevorzugte Ausführungsform der Erfindung in Ansicht von vorne.
Figur 18 eine Aufsicht auf die Vorrichtung nach Figur 17,
Figur 19 eine Seitenansicht der Vorrichtung nach Figur 17,
Figur 20 eine Vorderansicht des Gehäuseoberteiles,
Figur 21 eine Seitenansicht des Gehäuseoberteiles,
Figur 22 in perspektivischer Ansicht eine Federklemme auf einer die Streckenkarte aufnehmenden Achse zum Festlegen der Streckenkarte,
Figuren 23a und 23b eine abgeänderte Ausführungsform der Darstellung nach Fig. 22, und
Fig. 24 eine Variante, bei der die erfindungsgemäße Vorrichtung mit einem Fahrradcomputer kombiniert ist.

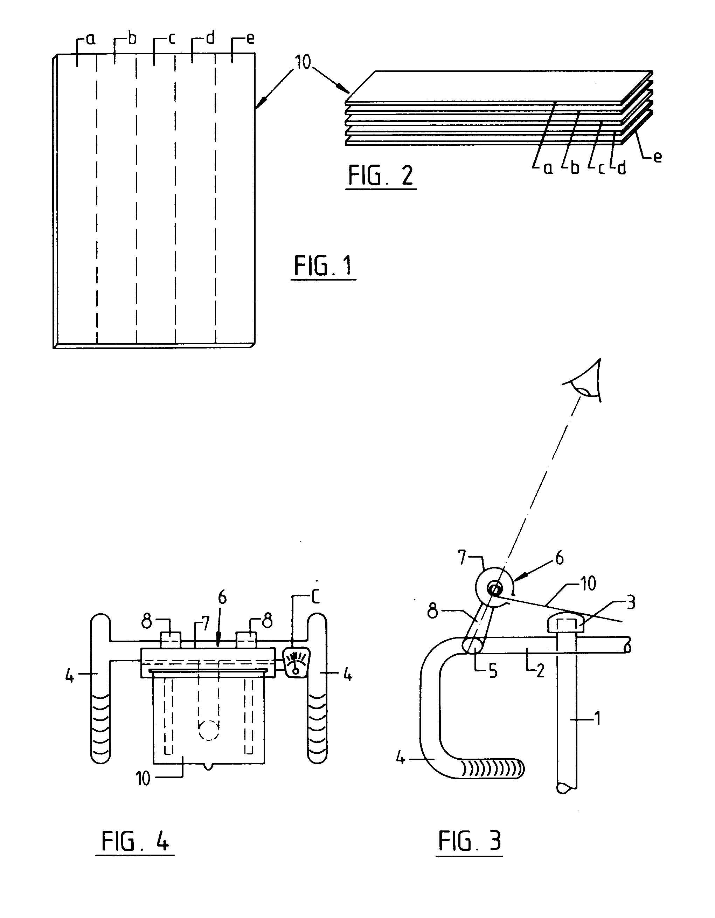

Eine herkömmliche Streckenkarte, wie sie im Handel erhällich ist und von Radfahrern benutzt wird, ist eine normale Landkarte im Maßstab 1:50 000 oder 1: 100 000, die in verschiedener Weise gefaltet werden kann und die zum Lesen der Strekkenkarte auseinandergefaltet und anschließend wieder zusammengelegt werden muß. Eine solche Streckenkarte ist in Fig. 1 schematisch in Schrägansicht angedeutet, wobei die Dicke der Karte erheblich übertrieben gezeichnet ist. Sie besteht aus einzelnen Reihen und Spalten von Planquadraten, wobei die Spalten von Planquadraten mit a, b, c, d, e angedeutet sind; z.B. kann diese Streckenkarte an den Trennlinien zwischen den Spalten a und b, b und c, usw. gefaltet werden. Eine derartige Strekkenkarte muß für die Zwecke vorliegender Erfindung in Streifenform gebracht werden; es wird hierfür eine Streckenkarte vorgeschlagen, die in Fig. 2 schematisch in seitlicher Schrägansicht dargestellt ist. Hierbei ist die Streckenkarte nach Fig. 1 in die einzelnen Spalten a, b, c, d, e geschnitten und die einzelnen spaltenförmigen Kartenabschnitte sind übereinander blockartig angeordnet, d.h., daß die in einer Ebene dargestellte Streckenkarte in Streifen in unterschiedlichen Ebenen unterteilt ist.

Mit dem Steuerrohr 1, das am (nicht dargestellten) Fahrradrahmen befestigt ist, ist der Lenkstangenschaft 2 über eine Schraubenmutter 3 verbunden. Der Lenkstangenschaft 2 nimmt die Lenkstange 4 bzw. deren Querrohr 5 auf. Am Querrohr 5 ist die Haltevorrichtung 6 für die Streckenkarte 10 in Form eines rohrförmigen Gehäuses 7 mit einer Befestigungsvorrichtung 8 festgelegt. Vorzugsweise ist das Gehäuse 7 in bezug auf das Querrohr 5 der Lenkstange 4 so angeordnet, daß Querrohr 5, Rohrgehäuse 7 und die Augen des Fahrers etwa in einer Ebene liegen, damit das Gehäuse 7 die Sicht nach unten möglichst wenig beeinträchtigt. Bei einer speziellen Ausführungsform einer derartigen Haltevorrichtung 6 ist am Rohrgehäuse 7 seitlich ein Fahrrad-Computer C befestigt, der wegen der Anbringung der Haltevorrichtung 6 am Lenker nicht an der üblichen Stelle in der Mitte des Lenkers angebracht werden kann.

Das rohrförmige Gehäuse 7 weist eine konzentrische Achse 9 auf, auf der die Streckenkarte 10 in Streifenform aufgewickelt ist. Die Streckenkarte in Streifenform wird aus der schlitzartigen Öffnung 11 des Gehäuses 7 herausgezogen und liegt dabei vorzugsweise auf einer Haltevorrichtung 12 auf, die gesondert am Lenker 4, an der Befestigungsvorrichtung 8 oder unmittelbar am Gehäuse 7 befestigt sein kann. Diese Haltevorrichtung ist entweder starr mit dem Gehäuse verbunden oder aus Stabelementen besteht, die aus-und einklappbar ausgebildet sind.

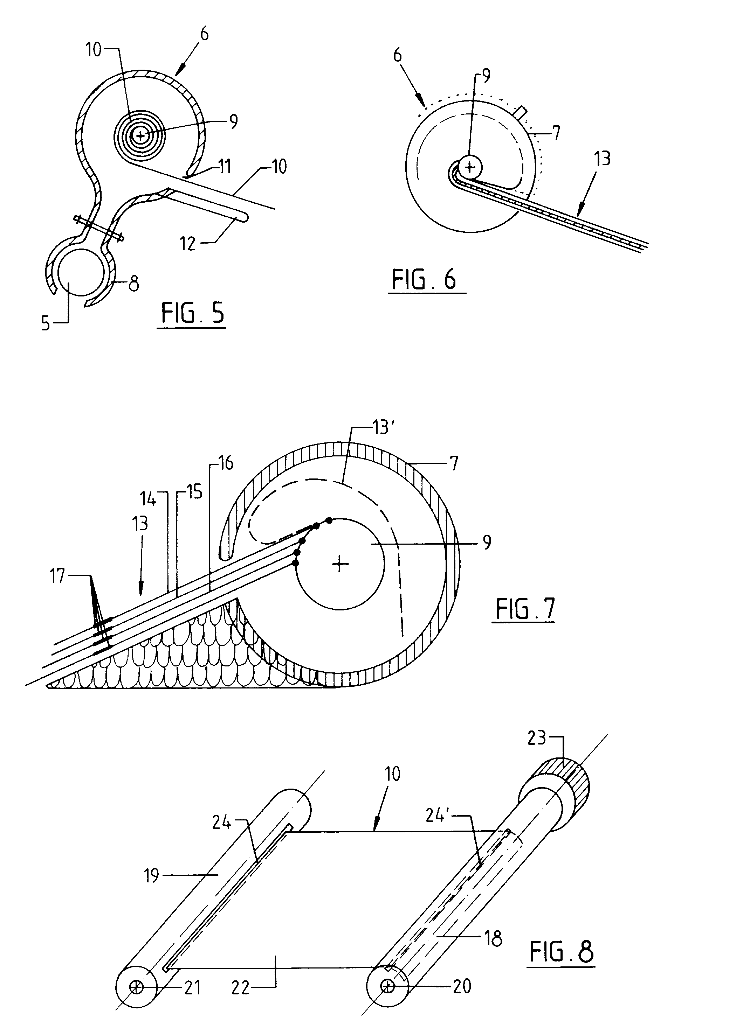

Bei der in Fig. 6 dargestellten Ausführungsform besteht der Streifen einer Streckenkarte aus einer Mehrzahl von übereinander angeordneten Streifen, die mit 13 bezeichnet sind, die an ihrem einen Ende mit der Achse 9 befestigt sind und die somit bei Drehung der Achse gemeinsam auf- oder abgewickelt werden. Der jeweilige benötigte Streifen wird dann aufgeschlagen, die darüberliegenden, nicht benötigten Streifen werden innerhalb des Gehäuses entlang der Gehäuseinnenwand, oder aber wahlweise außerhalb des Gehäuses um die Gehäuseaußenseite zurückgeschlagen, wo sie zweckmäßigerweise geführt oder eingerollt werden. Dabei ist es vorteilhaft, daß die einzelnen Streifen der Strekkenkarte beim Aus- und Einrollen aneinander haften, z.B. indem die Streifen der Karte eine Haftschicht aufweisen oder einzelne, eine Haftschicht aufweisende Stellen 17 haben, oder indem die einzelnen Streifen miteinander durch mechanische Mittel, z.B. Klammern miteinander verbunden werden.

In weiterer Ausgestaltung ist in Fig. 8 eine Anordnung dargestellt, die aus zwei im Abstand voneinander angeordneten rollenförmigen Gehäusen 18 und 19 besteht, auf deren Achsen 20, 21 der Streifen 22 der Karte auf- bzw. abgewickelt wird. Zweckmäßigerweise weist zumindest das eine Gehäuse, z.B. 18, auf der Achse 20 einen Drehgriff 23 auf, mit dessen Hilfe das Auf- und Abwickeln durchgeführt wird. Der Drehgriff 23 kann dabei mechanisch von Hand betätigt werden, oder aber auch motorisch, z.B. durch Elektromotor angetrieben werden, letzteres im Falle der Ausführung einer entsprechenden Kartenhaltevorrichtung für Kraftfahrzeuge, wobei in diesem Fall die Haltevorrichtung im Armaturenbrett ein- bzw. angebaut wird. Die Streckenkarte ist dabei in Form von hintereinander angeordneten Streifen ausgebildet, so daß die gesamte Streckenkarte, bestehend aus einer Mehrzahl von parallelen Spalten als ein einziger Streifen ausgebildet ist, bei dem die einzelnen Spalten hintereinander und aneinander anschließend ausgebildet sind. Die beiden Gehäuse 18, 19 nehmen in Schlitzen 24, 25 die beiden Enden der Streckenkarte 22 auf.

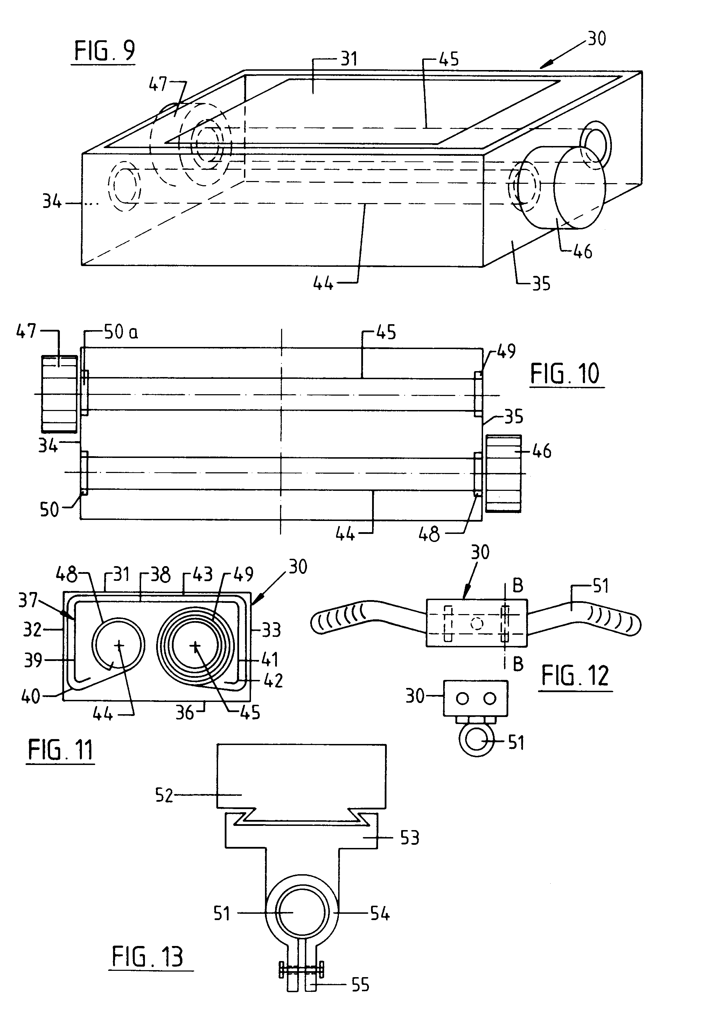

Bei der Ausführungsform nach den Figuren 9 - 13 nimmt das Gehäuse 30, das rechteckförmigen Querschnitt aufweist, und das aus einer Oberseite 31, der Vorderseite 32 und der Rückseite 33, den beiden Seitenflächen 34 und 35 sowie der Bodenfläche 36 besteht, eine Halte- und Führungsvorrichtung 37 mit einer Oberseite 38, einer Vorderseite 39 mit unterer Abbiegung 40 sowie einer Rückseite 41 mit unterer Abbiegung 42 auf. Zwischen dem Gehäuse 30 und der Vorrichtung 37 ist die Strekkenkarte 43 angeordnet, deren eines Ende mit einer Drehachse 44 und deren anderes Ende mit einer Drehachse 45 lösbar befestigt ist. Beide Achsen verlaufen parallel zueinander in der Längsachse des Gehäuses 30 von der einen Seitenfläche 34 zur gegenüberliegenden 35. Die Achse 34 nimmt an einem Ende außerhalb des Gehäuses 30 einen Drehknopf bzw. Drehgriff 46, die andere Drehachse 35 auf der gegenüberliegenden Seite einen Drehknopf bzw. Drehgriff 47 auf; die beiden Drehknöpfe 46 und 47 sind aus Gründen der einfacheren Bedienbarkeit auf entgegengesetzten Seiten angeordnet. Diese Drehknöpfe sind mit den Drehachsen lösbar befestigt, vorzugsweise über Stellschrauben, so daß die Drehknöpfe von den Drehachsen gelöst werden können. Um die Drehachsen aus dem Gehäuse herauszunehmen, z.B. zum Wechseln der Streckenkarten, wird einer der Drehknöpfe, z.B. 46, gelöst, ferner die gegenüberliegende Seitenwand 34 entfernt, so daß anschließend die beiden Drehachsen herausgezogen werden können. Die Drehachsen 34 und 35 sind in Lagerstellen 48, 49 der Gehäuseseitenwand 35 bzw. 50, 50a der Seitenwand 34 vorgesehen; die Lagerung kann jedoch auch in den mit den Seitenwänden 34 und 35 des Gehäuses 30 parallelen Seitenwänden der Halte-und Führungsvorrichtung 37 angeordnet sein.

Das Gehäuse 30 besteht zweckmäßigerweise aus transparentem Kunststoffmaterial; es kann jedoch auch aus anderem Material, z.B. Aluminium, hergestellt sein, wobei dann die Oberseite 31 ein Sichtfenster 31 aus transparentem Material erhält, durch das die Streckenkarte 43 gelesen werden kann. Auf der Sichtfläche 31 des Gehäuses können ferner Markierungen vorgesehen sein, um das Lesen der Streckenkarte zu erleichtern, z.B. ein Raster, aus dem die Entfernung zwischen zwei Punkten auf einfache Weise bestimmt werden kann.

In den Figuren 12 und 13 ist schematisch ein Fahrradlenker 51 in Aufsicht dargestellt, auf dem die Vorrichtung 30 angeordnet ist. Wie sich aus dem Schnitt längs der Linie B-B ergibt, ist auf der Unterseite 36 der Vorrichtung 30 eine schwalbenschwanzförmige Leiste 52 vorgesehen, die in einen entsprechend kongruenten schwalbenschwanzförmigen Träger 53 eingeschoben werden kann, mit dem eine Klemmvorrichtung 54 befestigt ist, die über eine Schraubverbindung 55 am Lenker 51 befestigt wird. Die Erfindung ist jedoch auf eine derartige Befestigungsvorrichtung in keiner Weise beschränkt.

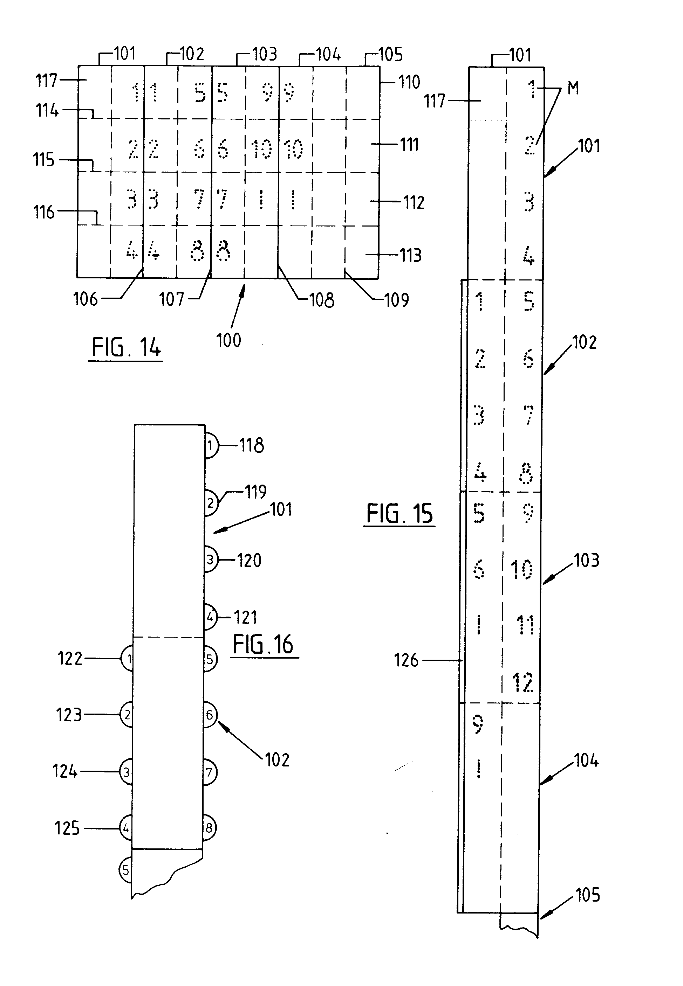

Fig. 14 zeigt eine herkömmliche Streckenkarte 100 in aufgefaltetem Zustand. Eine derartige Karte ist in vertikale Spalten 101, 102, 103, 104, 105 mit dazwischenliegenden vertikalen Faltlinien 106, 107, 108, 109, und horizontale Reihen 110, 111, 112, 113 mit entsprechenden horizontalen Faltlinien 114, 115, 116 organisiert. Damit entstehen entsprechende Kartenfelder 117 quadratischer oder rechteckförmiger Gestalt. Die einzelnen Felder sind in der gefalteten Streckenkarte jeweils durch eine horizontale und eine vertikale Faltlinie begrenzt, die auf der streifenförmigen Streckenkarte nach Fig. 15 nur vorhanden ist, wenn die Karte aus einer Karte 100 nach Fig. 14 geschnitten wird; derartige Faltlinien fehlen jedoch, wenn die streifenförmige Strekkenkarte kontinuierlich hergestellt wird. Diese Felder können beispielsweise durch eine weitere vertikale Faltlinie nochmals unterteilt faltbar sein. Eine derartige Streckenkarte ist für den Gebrauch in Verbindung mit der Vorrichtung nach der Erfindung so zu organisieren, daß die einzelnen Spalten 101, 102, 103, 104, 105 nicht parallel nebeneinander, sondern in Streifenform hintereinander angeordnet sind, wobei das Ende der Spalte A nahtlos in den Anfang der Spalte B usw. übergeht, wenn die Streckenkarte nach Fig. 14 in die einzelnen Spalten 101-105 zerschnitten wird und die einzelnen Spalten in Serie miteinander verbunden, z.B. verklebt werden. Dies ergibt eine Streckenkarte nach Fig. 15. Diese Streckenkarte kann jedoch auch als einstückiger Streifen original hergestellt werden, wenn der Umweg über das Zerschneiden vohandener, gefalteter Streckenkarten vermieden werden soll. Im Falle der Streckenkarte nach Fig. 15 steht dem Betrachter in Rollenform somit eine für die Vorrichtung nach der Erfindung geeignete Karte zur Verfügung, die die Breite einer Spalte 101, 102 usw., aber maximal die Breite der Vorrichtung hat.

Wenn der Kartenbenutzer die Streckenkarte nach Fig. 15 in der erfindungsgemäßen Vorrichtung liest und die Verbindung von z.B. Spalte 101 nach Spalte 102 benötigt, muß er den Streckenkartenstreifen entsprechend Fig. 15 um die gesamte Länge einer Spalte weiterdrehen, bis er in Spalte 102 die Anschlußstelle aus der Spalte 101 aufgefunden hat. Für ungeübtere Kartenleser ist dies manchmal nicht ganz einfach. Aus diesem Grunde werden bei der streifenförmigen Streckenkarte nach Fig. 15 Markierungen vorgesehen, die die Anschlußverbindungen von einer Spalte zur nächsten deutlich machen und das Ablesen entscheidend vereinfachen. Diese Markierungen sind in Fig. 15 entweder in Form von Ziffern 1, 2, 3, 4 entsprechend den Reihen 110, 111, 112, 113 der Streckenkarte nach Fig. 14 gekennzeichnet, und zwar einmal am rechten Rand der Spalte 101 und ferner am linken Rand der Spalte 102 nach Fig. 15. Diese Markierungen in Form von Ziffern, Buchstaben oder dgl. sind beispielsweise gestrichelt, punktiert oder transparent ausgebildet, damit die eigentliche Kartendarstellung nicht unleserlich überdeckt wird. In den Fig. 14 und 15 ist diese Markierung durch gestrichelte Ziffern 1, 2, 3, 4 ... angedeutet.

Anstelle einer derartigen Markierung durch Ziffern, Buchstaben oder dgl. können (Fig. 16) entsprechende Markierungen in Form von seitlich vorstehenden Lappen 118-121, 122-125 usw. vorgesehen sein, wobei die Lappen 118-121 am rechten Rand des Abschnittes 101 und die Lappen 122-125 am linken Rand des Abschnittes 102 jeweils die gleiche Übergangsstelle auf der Karte zwischen Abschnitt 101 und 102 kennzeichnen, so daß damit eine eindeutige Zuordnung und ein extrem einfaches Auffinden ermöglicht ist. Die Lappen weisen vorzugsweise zur besseren Identifizierung ebenfalls entsprechende Ziffern, Buchstaben oder dgl. auf, damit Verwechslungen ausgeschlossen sind und der Lappen 118 dem Lappen 122, der Lappen 119 dem Lappen 123 usw. zugeordnet wird; in Fig. 16 ist deshalb dargestellt, wie die Lappen 118-121 mit den Ziffern 1-4 und die Lappen 122-125 mit den gleichen Ziffern 1-4 gekennzeichnet sind.

Zum einfacheren Lesen der Karte in Streifenform nach Fig. 15 ist bei einer weiteren Ausführungsform zumindest auf einer, vorzugsweise der linken Seite der Abschnitte 102, 103, 104 ein schmaler Streifen 126 vorgesehen, der die Kartendarstellung des Randstreifens des vorausgehenden Abschnittes zeigt, so daß damit eine Überlappung vorgesehen wird, die beim Weiterdrehen der streifenförmigen Streckenkarte den Übergang von dem einen Abchnitt 101 auf den nächsten Abschnitt 102 erleichtert.

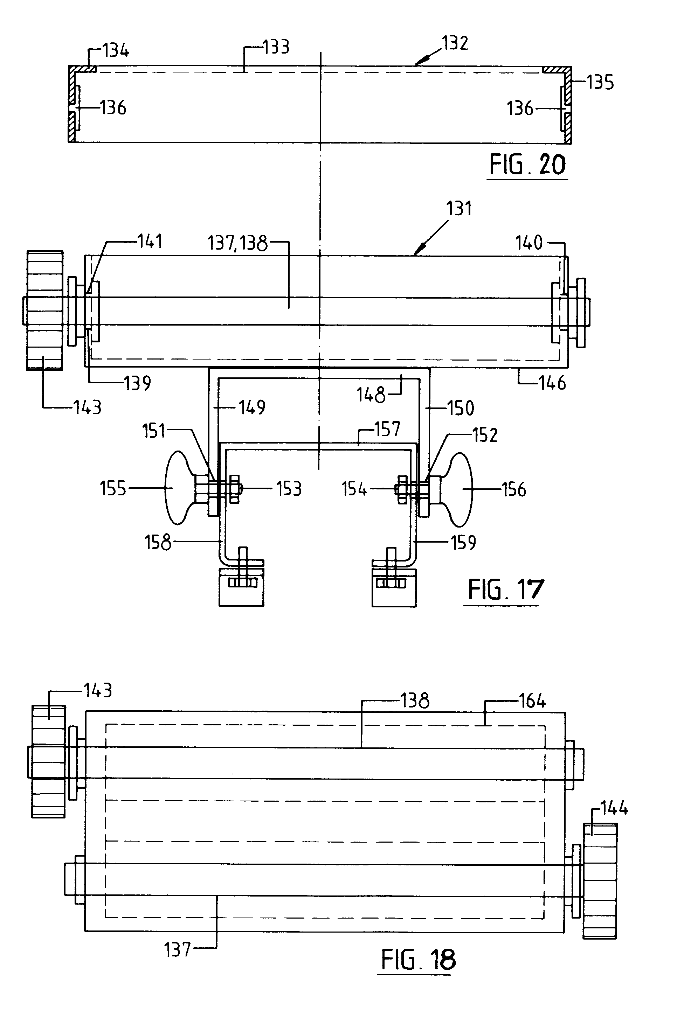

Bei einer bevorzugten Ausführungsform der Erfindung nach den Figuren 17 - 21 besteht das länglich-rechteckförmige Gehäuse 130 aus einem Gehäuseunterteil 131 und einem Gehäuseoberteil 132, wobei das Oberteil 132 über das Unterteil 131 gesteckt ist und das Oberteil 132 auf der Oberseite eine transparente, glasklare Fläche (Fenster) 133 aufweist, durch die hindurch die Streckenkarte gelesen wird. Das Unterteil weist ferner einen tischartigen Mittelsteg 131' auf, der als Abstützung für die Streckenkarte dient. Die Seitenwände des Deckels 132 sind mit 134 und 135 bezeichnet. Die Seitenwände des Deckels 132 und die Seitenwände des Bodenteiles 131 sind so zueinander passend ausgebildet, daß eine wasserdichte, stoßfeste und geräuschdämpfende Verbindung erzielt wird, z.B. durch auf den Innenflächen der Seitenwände des Deckels angeordnete Dämpfungsstreifen 136. Die im Gehäuse 130 angeordneten beiden voneinander beabstandeten Achsen 137, 138 sind durch Ausnehmungen 139, 140 auf den beiden gegenüberliegenden schmalen Seitenwänden geführt und in Lagern 141, 142 (Kunststoff- oder Gummilager) gelagert, so daß einerseits ein Klappern verhindert wird und andererseits eine sichere und leichtgängige Führung gewährleistet ist. An den beiden äußeren, über das Gehäuse hinausragenden Enden der Achsen 137, 138 ist - auf entgegengesetzten Seiten der Achsen -jeweils ein Stellknopf bzw. Stellrad 143, 144 lösbar befestigt. Mit diesen beiden Stellknöpfen bzw. Stellrädern wird die Streckenkarte in der einen und in der entgegengesetzten Richtung weitergedreht. Der Deckel 132 ist mit dem Gehäuseunterteil 131 lösbar über eine Schraubverbindung 145 befestigt; diese Schraubverbindung ist vorzugsweise als unverlierbare Schraube ausgebildet. Damit kann der Deckel zum Auswechseln der Streckenkarte vom Gehäuseunterteil auf einfach Weise entfernt werden.

Das Gehäuseunterteil 131 ist auf seiner Unterseite 146 mit einem U-förmigen Bügel 148 befestigt, dessen beide Seitenarme 149, 150 jeweils eine Bohrung 151, 152 bzw. einen nach unten geöffneten Schlitz 152' aufweisen, die zur Aufnahme von Befestigungs- und Stellschrauben 153, 154 bestimmt sind, an deren äußeren Ende jeweils ein Stellknopf 155, 156 vorgesehen ist. Die Schrauben 153, 154 sind ferner in einer Schraubenmutter am schwenkbar angeordneten U-förmigen Bügel 157 aufgenommen, z.B. eingepreßt, dessen Seitenarme 158, 159 zur Befestigung an der Fahrradlenkstange 160 ausgebildet sind. Bei der dargestellten Ausführungsform ist das freie Ende der Seitenarme 158, 159 mit einer halbkreisförmigen Ausnehmung 161 versehen und an den beiden freien Enden rechtwinklig umgebogen; an diese Umbiegungen ist jeweils ein eine etwa halbkreisförmige Ausnehmung aufweisender Haltebügel 162 mittels Schrauben 163 befestigt, so daß die gesamte Halterung am Lenker 160 festgelegt und auf einfach Weise gelöst werden kann. Die Schraubverbindungen sind gegen unfreiwilliges Lösen gesichert, die Kontaktflächen der Halterung, die in Eingriff mit dem Fahrradlenker stehen, sind vorzugsweise mit einer dämpfenden Auflage versehen, um Klappergeräusche zu vermeiden.

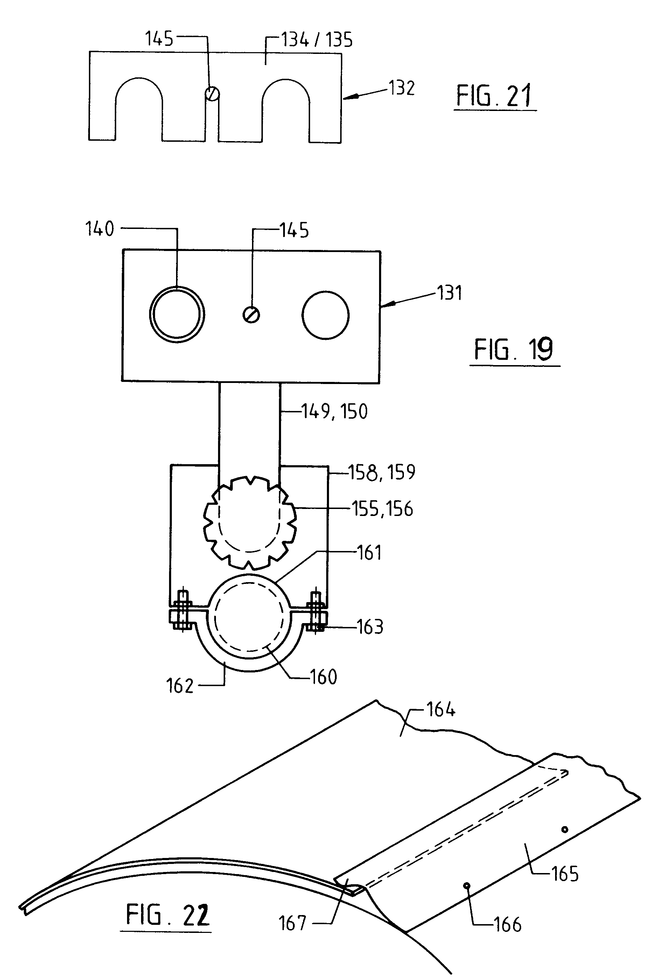

In Figur 22 ist schematisch dargestellt, wie der Anfang (bzw. das Ende) der Streckenkarte mit der Aufwickel- bzw. Abwickelachse 137, 138 befestigt ist. Hierzu sind auf der Oberfläche der Achse eine oder mehrere Federklemmen 165 aufgenietet (bei 166), deren vorderes, federndes Ende 167 gegen den Anfang bzw. das Ende der Streckenkarte 164 drückt und damit die Streckenkarte fixiert. Anstelle einer derartigen Federklemme können die Achsen 137, 138 ähnlich einer Filmspule einen Schlitz aufweisen, in den das Ende der Streckenkarte umgebogen eingeführt wird. Hierzu weist die Streckenkarte am Anfang und am Ende entsprechende Laschen oder dergl. auf.

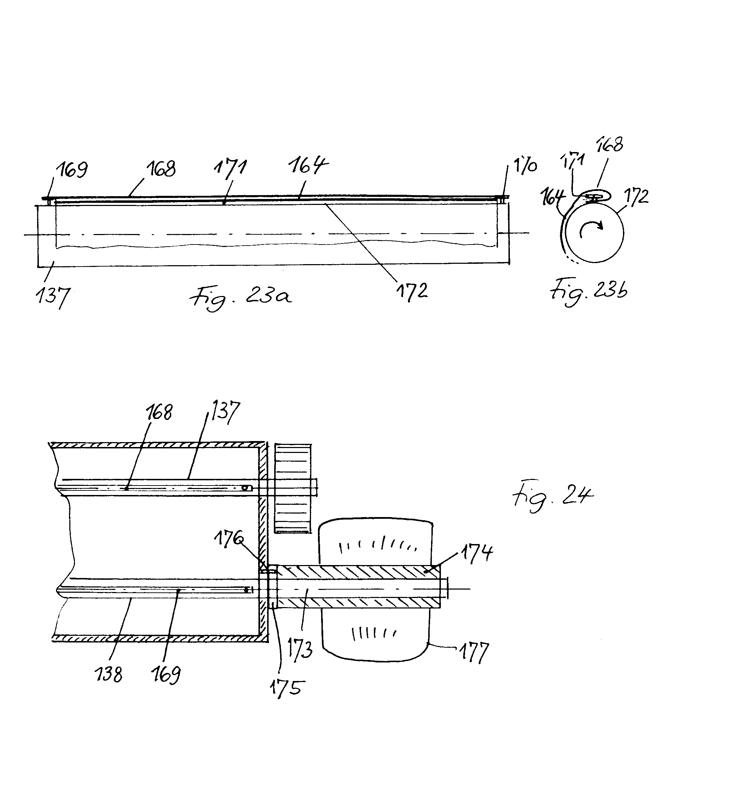

Nach einer weiteren Ausführungsform (Figuren 23a, 23b) ist auf jede der beiden Achsen eine dünne Leiste 168 bei 169, 170 aus Metall oder Kunststoff aufgenietet, die in geringem Abstand über und parallel zur Oberfläche der Achse 137, 138 verläuft; durch den Spalt 171 zwischen Umfangsfläche 172 oder Achse 137 und Leiste 168 wird der Anfang bzw. das Ende der Streckenkarte 164 geschoben und umgeknickt bzw. umgeschlagen, so daß beim Drehen der Achse im Aufwickelsinn die Streckenkarte mitgenommen und weitergedreht wird. Nach der ersten vollen Umdrehung drückt die zweite Lage der Streckenkarte bereits auf die erste Lage, so daß die Karte nunmehr festgeklemmt ist.

Fig. 24 zeigt eine weitere Variante der Erfindung, nach der eine Achse 138 der beiden parallelen Achsen 137, 138 außerhalb des Gehäuses 130 verlängert ist. Die Verlängerung 173 nimmt eine zylindrische Kunststoffbuchse 174 und ein Kunststoff- oder Gummilager 175 auf. An der Buchse ist ein Arretierungsstift 176 oder eine entsprechende Verriegelungsvorrichtung vorgesehen, der bzw. die in die Seitenwand des Gehäuses 130 eingreift und die die Position der Buchse 174 festlegt. Auf der Buchse 174 ist ein Fahrradcomputer 177 befestigt.

## Patentansprüche

1. Vorrichtung zum Aufnehmen und Halten von Streckenkarten, die an der Lenkstange von Fahrrädern befestigt ist, dadurch gekennzeichnet, daß
a) die Streckenkarte (10) als aufwickelbarer Streifen in Rollenform ausgebildet ist,
b) ein rohrförmiges Gehäuse (7, 30) in dem die auf- und abwickelbaren Streckenkarte aufgenommen ist, mindestens eine Auf- und Abwickelachse für die Streckenkarte aufweist, die in den Gehäuseseitenwänden gelagert ist,
c) eine mit dem Gehäuse (7) verbundene Halte- bzw. Führungsvorrichtung (32) zur Festlegung der Streckenkarte (10) im Gehäuse vorgesehen ist, und
d) eine Vorrichtung (8) zum Befestigen des Gehäuses (7) mit Kartenhaltervorrichtung (12) und Streckenkarte (10) am Fahrradlenker (4).

2. Vorrichtung nach Anspruch 1, dadurch gekennzeichnet, daß das Gehäuse (7) eine Gehäuseachse (9) zum Aufnehmen und Aufwickeln der Streckenkarte (10) aufweist, und daß mit der Gehäuseachse (9) eine Antriebsdrehvorrichtung zum Drehen der Achse zusammen mit dem eingespannten Kartenende rolloartig gekoppelt ist, wobei das Gehäuse (7) und die Gehäuseachse (9) eine Sperrvorrichtung aufweisen, die die herausgezogene Streckenkarte in der gewünschten Position rolloartig arretiert.

3. Vorrichtung nach einem der Anspruch 1 oder 2, dadurch gekennzeichnet, daß die Spaltenabschnitte (a, b, c, d, e) der Streckenkarte (10) übereinanderliegend angeordnet und miteinander an dem Gehäuse (9) befestigt sind, und daß die einzelnen übereinanderliegenden Spaltenabschnitte (14, 15, 16) der Streckenkarte (13) miteinander mechanisch und lösbar, z.B. mittels Klammern oder Haftverbindern verbunden sind.

4. Vorrichtung nach Anspruch 1, gekennzeichnet durch
a) zwei parallel zueinander angeordnete Drehachsen (44, 45) im Gehäuse (30), deren eine das eine Ende der Streckenkarte (43) und deren andere das andere Ende der Streckenkarte aufnimmt, wobei zumindest ein wesentlicher Teil der Oberfläche (31) transparent ausgebildet ist, damit der Betrachter den unmittelbar darunterliegenden Kartenabschnitt betrachten kann,
b) einen Drehknopf bzw. Drehgriff (46, 47) am Ende einer jeden Drehachse (44, 45), mit dem die jeweilige Achse drehbar ist, wobei durch Drehung des einen Drehknopfes die eine Drehachse in einer Richtung, und durch Drehen des anderen Drehknopfes die andere Drehachse in der entgegengesetzten Richtung bewegt wird,
c) eine Halte- bzw. Führungsvorrichtung (37) im Gehäuse (30) als Auflage für die Streckenkarte (43), die von der einen Drehachse zur anderen verläuft.

5. Vorrichtung nach Anspruch 10, dadurch gekennzeichnet, daß das Gehäuse (30) rechteckförmigen Querschnitt hat, und daß die Führungsvorrichtung (37) parallel zur Deckfläche (31) und der Vorder- und Rückseite (32, 33) des Gehäuses (30) angeordnet ist, wobei zwischen der Oberseite (38) der Führungsvorrichtung (37) und der Deckfläche (31) des Gehäuses (30) ein geringer Abstand zum Durchziehen der Streckenkarte (43) vorgesehen ist.

6. Vorrichtung nach Anspruch 11, dadurch gekennzeichnet, daß das Gehäuse (30) aus transparentem, schlagfestem Kunststoff besteht und daß die Kartenführung bzw. -halterung aus Aluminium, Blech, Kunststoff oder dergl. Material hergestellt ist.

7. Vorrichtung nach einem der Ansprüche 10 - 13, dadurch gekennzeichnet, daß ein Drehknopf (46) auf der einen Seite (34) der einen Drehachse (44) und ein weiterer Drehknopf (47) auf der anderen Seite (35) der anderen Drehachse (45) angeordnet ist, daß die Halte-und Führungsvorrichtung (37) jeweils seitliche Führungsnuten aufweist, in denen die Seitenbegrenzungen der Streckenkarte (43) geführt sind, und daß das eine Ende der Streckenkarte (43) mit der einen Drehachse und das andere Ende der Streckenkarte mit der anderen Drehachse lösbar, z.B. durch Stecken, Kleben, Klemmen oder dergl. befestigt ist.

8. Vorrichtung nach Anspruch 1, dadurch gekennzeichnet, daß
a) das die streifenförmige, umspulbare Streckenkarten aufnehmende Gehäuse (130) aus einem unteren (131) und einem oberen (132), den unteren Teil schuhkartonartig umschließenden Teil besteht, wobei unterer und oberer Teil wasserdicht, stoßfest und geräuschdämpfend sowie lösbar miteinander verbunden sind,
b) die beiden die Aufwickel- und Abwickelrollen (137,138) darstellenden Achsen in Führungsbuchsen (141, 142) aus Kunststoff oder Gummi in den Seitenwänden (134, 135) gelagert sind und die Seitenwände des Deckels und des Bodenteiles Ausnehmungen zur Aufnahme der Achsen haben,
c) der Boden (146) des Gehäuses (130) einen U-förmigen Tragbügel (148) aufweist, an dessen Seitenarmen (149, 150) ein mit der Fahrradlenkstange (160) befestigbarer Halteblock (157, 162) lösbar festgelegt ist.

9. Streckenkarte zur Verwendung in Verbindung mit einer Vorrichtung nach den Ansprüchen 1 - 8,
dadurch gekennzeichnet, daß die bei einer gefalteten Streckenkarte (100) in Spalten (101-105) und Zeilen (110-113) angeordneten Planquadrate bzw. Kartenabschnitte (117) zu einer Streifenform (Fig. 15, 16) organisiert sind, bei der die parallelen Spalten (101-105) (Fig. 14) zu streifenförmig aneinander anschließenden Abschnitten (101-105) (Fig. 15) ausgebildet sind, und
daß die Streckenkarte eine Karte mit der Breite eines Kartenabschnittes, jedoch maximal der Breite der Vorrichtung, bzw. einer Spalte und mit der Länge gleich der Summe der Länge aller Spalten (101-105) ist, wobei die einzelnen Spaltenabschnitte (102, 103, 104, 105) der streifenförmigen Streckenkarte auf einer Längsseite einen schmalen Streifen (126) aus der gegenüberliegenden Längsseite des jeweils vorausgehenden Streckenabschnitte aufweisen.

10. Streckenkarte nach Anpruch 9, dadurch gekennzeichnet, daß an den Längsseiten der streifenförmigen Streckenabschnitte (101, 102,...) der Streckenkarte die Reihen (114, 115, 116) der faltbaren Streckenkarte (100) kennzeichnende Markierungen (M) vorgesehen sind, derart, daß in der ersten Spalte (101) in Längsrichtung und auf der rechten Seite nacheinander angeordnete Markierungen (M; 1, 2, 3, 4) und die gleichen Markierungen (M; 1, 2, 3, 4) auf der nachfolgenden Spalte (102) auf der linken Seite vorgesehen sind, daß in der zweiten Spalte (102) in Längsrichtung und auf der rechten Seite nacheinander angeordnete Markierungen (M; 5, 6, 7, 8) und die gleichen Markierungen (M; 5, 6, 7, 8) auf der nachfolgenden Spalte (103) auf der linken Seite vorgesehen sind usw., so daß der Betrachter am Übergang von der einen zur nachfolgenden Spalte der Streckenkarte durch gleiche Markierungen die gemeinsamen Kartenpositionen der beiden aufeinanderfolgenden Spalten erkennt, wobei vorzugsweise z.B. am linken Rand eines jeden Abschnittes (101, 102, 103) ein überlappender Kartenstreifen (117) vorgesehen ist, der die Kartendarstellung des vorausgehenden Kartenabschnittes am rechten Kartenrand wiederholt.
